# EUROPEAN PATENT APPLICATION

(11) **EP 1 679 446 A1**
(43) Date of publication of application: **12.07.2006**
(21) Application number: 04792853.6
(22) Date of filing: 22.10.2004
(51) Int. Cl.: F16C 33/78, F16C 33/76, F16C 33/58

(54) **SEALED ROLLER BEARING**

(30) Priority: 28.10.2003 JP 2003367307; 09.01.2004 JP 2004004245
(71) Applicant: NTN CORPORATION, Osaka-shi, Osaka 550-0003 (JP)
(72) Inventor: MURAMATSU, Makoto, Iwata-shi, Shizuoka 4388510 (JP); KUNIMATSU, Daisuke, 4388510 (JP)
(74) Representative: Cohausz & Florack
(86) International application number: PCT/JP2004/015711
(87) International publication number: WO 2005/040626

(57) **Abstract**

An object of the present invention is to provide a sealed rolling bearing provided with sealing devices having both functions of high sealability and small sliding resistance which are antipodal each other. According to the present invention, there is provided, a sealed rolling bearing comprising an outer member (1; 30) formed on its inner circumferential surface with outer raceway surface (8; 29); an inner member (4, 5; 32) formed on its outer circumferential surface with inner raceway surface (9a, 9b; 31) arranged oppositely to the outer raceway surface (8; 29); rolling elements (10; 34) contained freely rollably between the outer and inner raceway surfaces; and sealing devices (12, 13; 35) arranged in an annular space formed between the outer and inner members (1; 30 and 4,5; 32) **characterized in that**: each of the sealing devices (12, 13; 35) has sealing lips (27a~27c, 23~25; 37a, 37b) of elastic member; that the maximum height Ry or Rmax of the surface roughness of a sliding surface of a member of rotational side (18, 4; 32) to which the sealing lips (27a~27c, 23∼25; 37a, 37b) sliding contact is limited to a value at 2.0 µ m or less, and that the run-out of the sliding surface normal thereto is limited to a value at 30 µm or less.

## Description

### BACKGROUND OF THE INVENTION

### Field of the Invention

The present invention relates to a sealed rolling bearing used for automobiles, motors in general use etc., and more particularly to a sealed roller bearing used under circumstances in which a great deal of water, muddy water and many other foreign matters.

### Description of Background Art

In general, sealed roller bearings having a high sealability preventing ingress of rain water or dusts into the inside of the bearing are used for example as bearings for the suspension of automobiles since these bearings are usually exposed to severe circumstances containing muddy water, dusts etc. On the other hand, such a rolling bearing is required to have its small rotational torque since a large rotational torque of bearing causes adverse influence to temperature rise of the bearing and fuel consumption. Since the sliding resistance of seals is a major factor of causing increase of the rotational torque of the bearing, it has been desired to provide a sealed rolling bearing having not only a high sealability but a small sliding resistance.

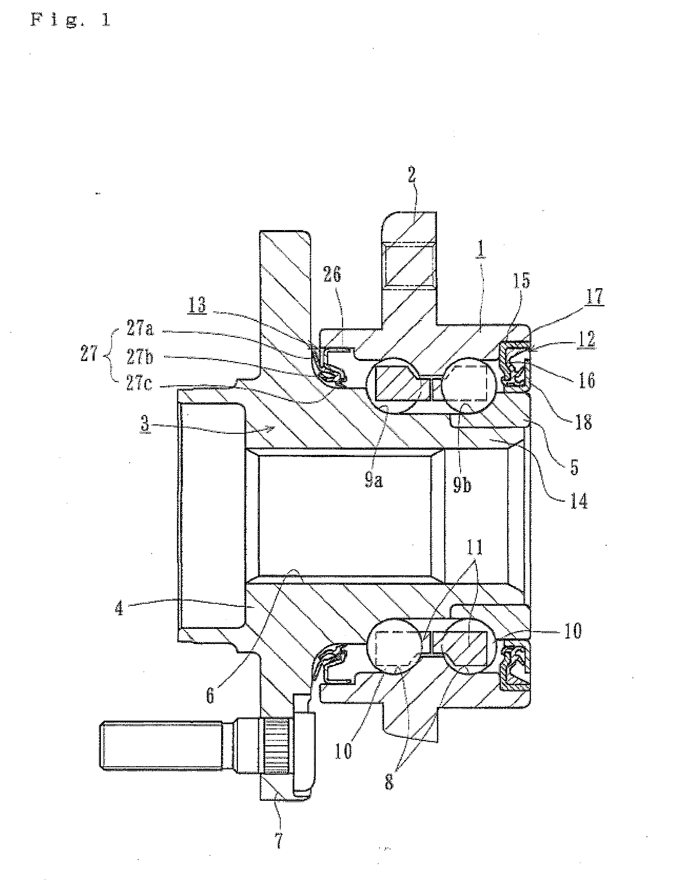

One representative example of such a bearing for automobile will be described with reference to Fig. 1 showing a first embodiment of the present invention. This bearing is that used for a driving wheel of automobile and comprises an outer member 1 integrally formed on its outer circumference with a body mounting flange 2 adapted to be mounted on a body (not shown) of automobile and also formed on its inner circumferential surface with double row outer raceway surfaces 8 and 8; a hub wheel 4 integrally formed on its one end with a wheel mounting flange 7 on which a wheel (not shown) is mounted and also formed on its outer circumferential surface with one inner raceway surface 9a arranged oppositely to one of the double row outer raceway surfaces 8 and 8 and having a cylindrical portion 14 of a smaller diameter axially extending from the inner raceway surface 9a and further formed on its inner circumferential surface with a serration 6 for torque transmission; and an inner ring 5 adapted to be fitted on the cylindrical portion 14 and formed on its outer circumferential surface with the other inner raceway surface 9b.

Double row rolling elements (balls) 10 are arranged between the double row outer and inner raceway surfaces 8 and 8; 9a and 9b and held freely rollably by cages 11. Sealing devices 12 and 13 are arranged at both ends of the outer member 1 within an annular space formed by an inner member 3 (including the hub wheel 4 and the inner ring 5) and the outer member 1 to prevent leak of grease contained within the bearing as well as ingress of rain water or dusts into the inside of the bearing.

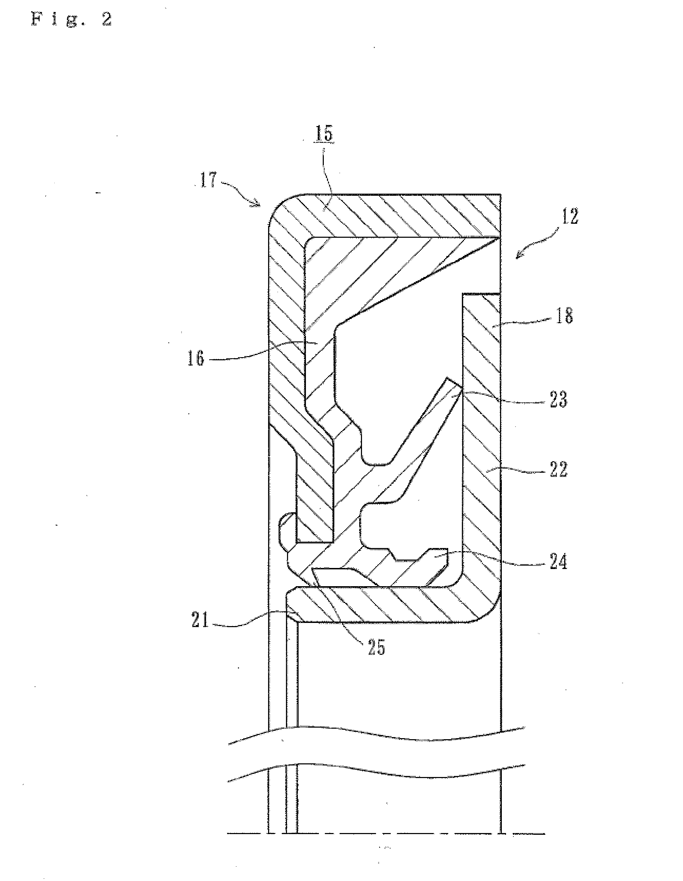

As shown in Fig. 2, the sealing device 12 of inboard side arranged between the outer member 1 and the inner ring 5 comprises a sealing ring 17 including a metal core 15 having a substantially L-shaped cross-section and fitted into the outer member 1 and a sealing member 16 integrally adhered via vulcanized adhesion on the metal core 15, and a slinger 18 having similarly a L-shaped cross-section and fitted onto the inner ring 5. The sealing member 16 is made of elastic material such as rubber and comprises three sealing lips i.e. an outer sealing lip 23, a middle sealing lip 24 and an inner sealing lip 25. The tip edge of the outer sealing lip 23 is sliding contacted to an inner side of an upstanding portion 22 of the slinger 18 and the tip edges of the middle sealing lip 24 and the inner sealing lip 25 are sliding contacted to a cylindrical portion 21 of the slinger 18.

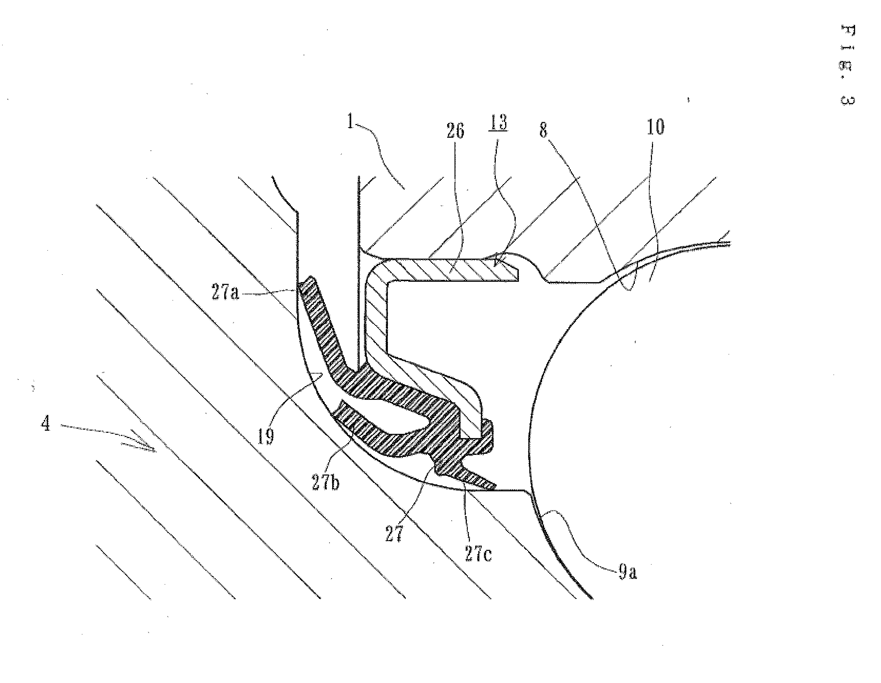

On the other hand the sealing device 13 of outboard side comprises as shown in Fig. 3 an annular metal core 26 and a sealing member 27 integrally adhered via vulcanized adhesion on the metal core 26. The sealing member 27 is made of elastic material such as rubber and comprises three sealing lips 27a, 27b and 27c and the tip edges of these sealing lips 27a, 27b and 27c are directly sealing contacted to the surface of the hub wheel 4.

In these sealing devices 12 and 13 of the bearing for a wheel of vehicle of the prior art, the slinger 18 of the sealing device 12 of inboard side has the surface roughness of a sliding surface to which the sealing lips 23, 24 and 25 sliding contact is limited to a value at the center line average height (Ra) at 0.3 µ m or less and to a value at the maximum height (Ry) at 1.2 µ m or less. Thus foreign materials cannot easily enter into the inside of the bearing because of difficulty of generation of small gap at the maximum height portions and damages which would be otherwise caused at rolling contact portions by change of properties of grease (see Japanese Laid-open Patent Publication No. 184897/2003).

### Disclosure of the Invention

### Subjects to be solved by the Invention

However in order to limit the surface roughness of a sliding surface to which the sealing lips 23, 24 and 25 sliding contact to the value at the center line average height (Ra) at 0.3 µ m or less and to the value at the maximum height (Ry) at 1.2 µ m or less, it is necessary previously to press sheet members having the target surface roughness or to carry out lapping of surfaces of sheet members after the press process thereof. In fact since availability of the plate member having such a target surface roughness is difficult, it is the state of things in view of its manufacturing cost to carry out lapping of surfaces of sheet members after the press process thereof.

Such a lapping of the surface of the slinger 18 makes its handling very difficult, increases the number of processing steps, and further causes deformation of surface of the slinger 18. Such a deformation of the sliding surface of the slinger 18 causes variation of the interference of the sealing member and thus reduction of the followability of the sealing lips and accordingly reduces the sealability of the bearing.

### SUMMARY OF THE INVENTION

It is, therefore, an object of the present invention to provide a sealed rolling bearing provided with sealing devices having both functions of high sealability and small sliding resistance which are antipodal each other.

### Means for solving problems

For achieving the object mentioned above, there is provided, according to the present invention of claim 1, a sealed rolling bearing comprising an outer member formed on its inner circumferential surface with outer raceway surface; an inner member formed on its outer circumferential surface with inner raceway surface arranged oppositely to the outer raceway surface; rolling elements contained freely rollably between the outer and inner raceway surfaces; and sealing devices arranged in an annular space formed between the outer and inner members characterized in that each of the sealing devices has sealing lips of elastic member; that the maximum height Ry or Rmax of the surface roughness of a sliding surface of a member of rotational side to which the sealing lips sliding contact is limited to a value at 2.0 µ m or less, and that the run-out of the sliding surface normal thereto is limited to a value at 30 µ m or less.

According to the present invention of claim 1, since each of the sealing devices has sealing lips of elastic member; that the maximum height Ry or Rmax of the surface roughness of a sliding surface of a member of rotational side to which the sealing lips sliding contact is limited to a value at 2.0 µ m or less, and that the run-out of the sliding surface normal thereto is limited to a value at 30 µ m or less, it is possible to suppress the absolute irregularities of the sliding surface small as well as to suppress variation of the interference without increasing the interference of the sealing member and thus to avoid the problem of deformation of the sliding surface which is caused by the lapping of the slinger. Accordingly it is possible to stabilize the followability of the sealing lips relative to the sliding surface and thus further to improve the sealability.

It is preferable, as defined in claim 2, that the sealing device comprises a sealing ring mounted on a member of stationary side and a slinger mounted on a member of rotational side, and that the sealing lips forming the sealing ring are sliding contacted to the slinger. This structure makes it unnecessary to strictly restrict the target surface roughness by applying lapping process to the sliding surface after the pressing process and it is possible to improve the sealability only by setting the run-out of the sliding surface at a predetermined value.

Also it is preferable, as defined in claim 3, the sealing device comprises a sealing ring mounted on a member of stationary side and including side lips and a radial lip, and that the sealing lips are directly sliding contacted to the member of rotational side. This structure makes it possible to easily carry out the surface machining such as grinding or lapping of the sliding surface after heat treatment thereof even if the target surface roughness and the run-out would not be obtained.

Further it is preferable, as defined in claim 4, that the sealing device comprises a sealing ring mounted on a member of stationary side and including a main lip and a sub lip, that the main lip is directly sliding contacted to a sealing groove formed on a member of rotational side and having a substantially U-shaped cross-section, and that the sub lip is sliding contacted to a ridge of the sealing groove via a small interference. This structure makes it possible to increase the interference with keeping the sealability due to ability of following of the sub lip when the main lip wears. Accordingly, it is possible to suppress the rotational torque of the bearing during amount of wear of the main lip is kept small as well as to obtain the sealability due to increase of interference in accordance with the wear of the main lip.

It is also preferable, as defined in claim 5, that the maximum height Ry or Rmax of the surface roughness of the sliding surface is limited to a value at 1.2 µm or less, and the run-out of the sliding surface normal thereto is limited to a value at 10 µ m or less. This enables to provide a sealed rolling bearing provided with sealing devices having both functions of high sealability and small sliding resistance which are antipodal each other.

### Effect of the Invention

According to the present invention, the sealed rolling bearing comprises an outer member formed on its inner circumferential surface with outer raceway surface; an inner member formed on its outer circumferential surface with inner raceway surface arranged oppositely to the outer raceway surface; rolling elements contained freely rollably between the outer and inner raceway surfaces; and sealing devices arranged in an annular space formed between the outer and inner members and is characterized in that each of the sealing devices has sealing lips of elastic member; that the maximum height Ry or Rmax of the surface roughness of a sliding surface of a member of rotational side to which the sealing lips sliding contact is limited to a value at 2.0 µ m or less, and that the run-out of the sliding surface normal thereto is limited to a value at 30 µ m or less. This makes it possible to suppress the absolute irregularities of the sliding surface small as well as to suppress variation of the interference without increasing the interference of the sealing member and thus to avoid the problem of deformation of the sliding surface which is caused by the lapping of the slinger. Accordingly it is possible to stabilize the followability of the sealing lips relative to the sliding surface and thus further to improve the sealability.

### Best mode for carrying out the present invention

The best mode for carrying out the present invention is a sealed rolling bearing comprising an outer member formed on its inner circumferential surface with outer raceway surface; an inner member formed on its outer circumferential surface with inner raceway surface arranged oppositely to the outer raceway surface; rolling elements contained freely rollably between the outer and inner raceway surfaces; and sealing devices arranged in an annular space formed between the outer and inner members characterized in that each of the sealing devices has sealing lips of elastic member; that the maximum height Ry or Rmax of the surface roughness of a sliding surface of a member of rotational side to which the sealing lips sliding contact is limited to a value at 2.0 µ m or less, and that the run-out of the sliding surface normal thereto is limited to a value at 30 µ m or less.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal-section view of a first embodiment of a sealed rolling bearing according to a first embodiment of the present invention;
Fig. 2 is a partially enlarged sectional view of the sealing device of inboard side of the sealed rolling bearing according to the first embodiment of the present invention;
Fig. 3 is a partially enlarged sectional view of the sealing device of outboard side of the sealed rolling bearing according to the first embodiment of the present invention;
Fig. 4 is a longitudinal-section view of a sealed rolling bearing according to a second embodiment of the present invention;
Fig. 5 is a partially enlarged sectional view of a sealing device of a second embodiment of the present invention; and
Fig. 6 is a graph showing results of mass variation in a muddy water proof test carried out by exposing a naked bearing itself to the muddy water.

### DESCRIPTION OF THE PREFERRED EMBODIMENTS

### First embodiment

Preferred embodiments of the present invention will be described with reference to accompanied drawings. Fig. 1 is a longitudinal-section view of a first embodiment of a sealed roller bearing of the present invention. The sealed rolling bearing shown in Fig. 1 is an example applied to a driving wheel of vehicle for rotatably supporting the wheel in a suspension of vehicle. Since the fundamental structure of the bearing provided with the sealing devices previously mentioned has been described at the beginning of this specification using this Fig. 1, characteristic portions of the bearing will be mainly described hereinafter.

Arranged at either ends of an annular space formed between the inner member 3 comprising the hub wheel 4 and the inner ring 5 and forming a member of rotational side and the outer member 1 forming a member of stationary side are the sealing devices 12 and 13 for preventing leakage of grease contained within the bearing as well as ingress of rain water or dusts into the inside of the bearing.

The sealing device 12 mounted between the outer member 1 and the inner wheel 5 at the inboard side (the right hand side in Fig. 1) comprises, as shown in Fig. 2, a sealing ring 17 including a metal core 15 having a substantially L-shaped cross-section and fitted into the outer member 1 and a sealing member 16 integrally adhered via vulcanized adhesion on the metal core 15, and a slinger 18 having similarly a L-shaped cross-section and fitted onto the inner ring 5. The slinger 18 and the metal core 15 are made by press forming of austenitic stainless steel sheet (JIS SUS 304 etc.) or preserved cold rolled sheet (JIS SPCC etc.).

The sealing member 16 is made of elastic material such as rubber and comprises three sealing lips i.e. an outer sealing lip 23, a middle sealing lip 24 and an inner sealing lip 25. The tip edge of the outer sealing lip 23 is sliding contacted to an inner side of an upstanding portion 22 of the slinger 18 and the tip edges of the middle sealing lip 24 and the inner sealing lip 25 are sliding contacted to a cylindrical portion 21 of the slinger 18. The surface roughness of a sliding surface of the slinger 18 to which the sealing lips 23, 24 and 25 sliding contact is limited to a value at 2.0 µ m or less, preferably at 1.2 µ m or less at the maximum height Ry or Rmax, and the run-out of the sliding surface normal thereto is limited to a value at 30 µ m or less, preferably at 10 µ m or less. That is, it is unnecessary to strictly restrict the target surface roughness by applying lapping process to the sliding surface after the pressing process as in the prior art and this is achieved only by setting the run-out of the sliding surface at a predetermined value.

Thus, it is possible to suppress the absolute irregularities of the sliding surface small as well as to suppress variation of the interference without increasing the interference of the sealing member and thus to avoid the problem of deformation of the sliding surface of the slinger 18 which is caused by the lapping of the slinger as in the prior art. Accordingly it is possible to stabilize the followability of the sealing lips 23, 24 and 25 relative to the sliding surface and thus further to improve the sealability.

On the other hand the sealing device 13 of outboard side comprises as shown in Fig. 3 an annular metal core 26 and a sealing member 27 integrally adhered via vulcanized adhesion on the metal core 26. The metal core 26 is made by press forming of austenitic stainless steel sheet (JIS SUS 303 etc.) or preserved cold rolled sheet (JIS SPCC etc.). The sealing member 27 is made of elastic material such as rubber and comprises two side lips (dust seal) 27a, 27b and one radial lip (grease seal) 27c, and the tip edges of the sealing lips 27a~27c are directly sliding contacted to the surface of the hub wheel 4, that is, a sliding surface 19 on the base of the wheel mounting flange 7 at the inboard side.

The maximum height Ry or Rmax of the surface roughness of a sliding surface 19 to which the sealing lips 27a, 27b and 27c sliding contact is limited to a value at 2.0 µm or less, preferably at 1.2 µm or less and that the run-out of the sliding surface 19 normal thereto is limited to a value at 30 µ m or less, preferably at 10 µ m or less. If these target surface roughness or run-out cannot be obtained, grinding or lapping process may be applied to the sliding surface after its heat treatment.

Thus similarly to the sealing device 12, it is possible to suppress the absolute irregularities of the sliding surface 19 small as well as to suppress variation of the interference without increasing the interference of the sealing member and thus to avoid the problem of deformation of the sliding surface. Accordingly it is possible to stabilize the followability of the sealing lips 27a, 27b and 27c relative to the sliding surface19 and thus further to improve the sealability.

### Second embodiment

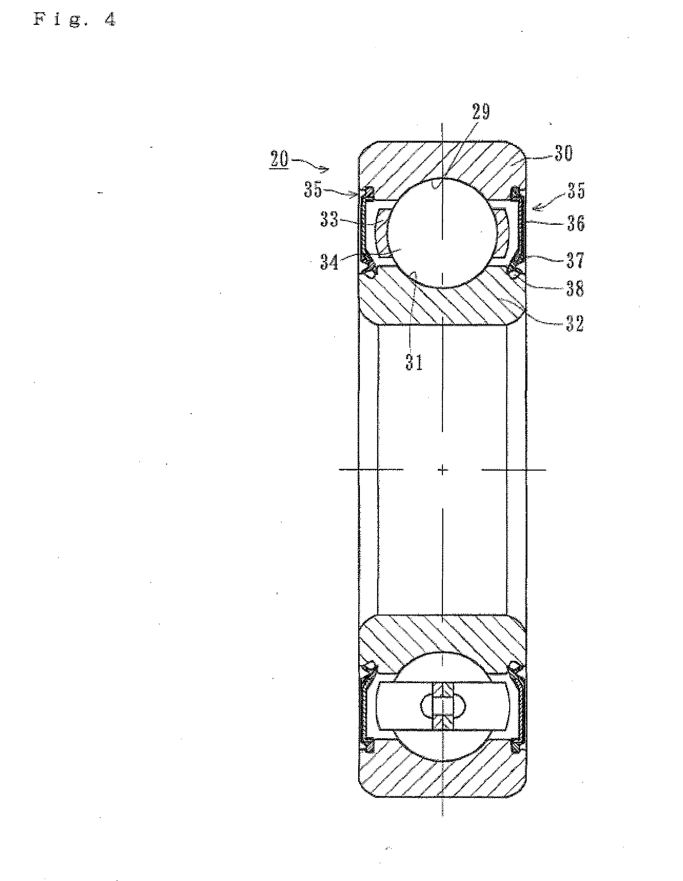

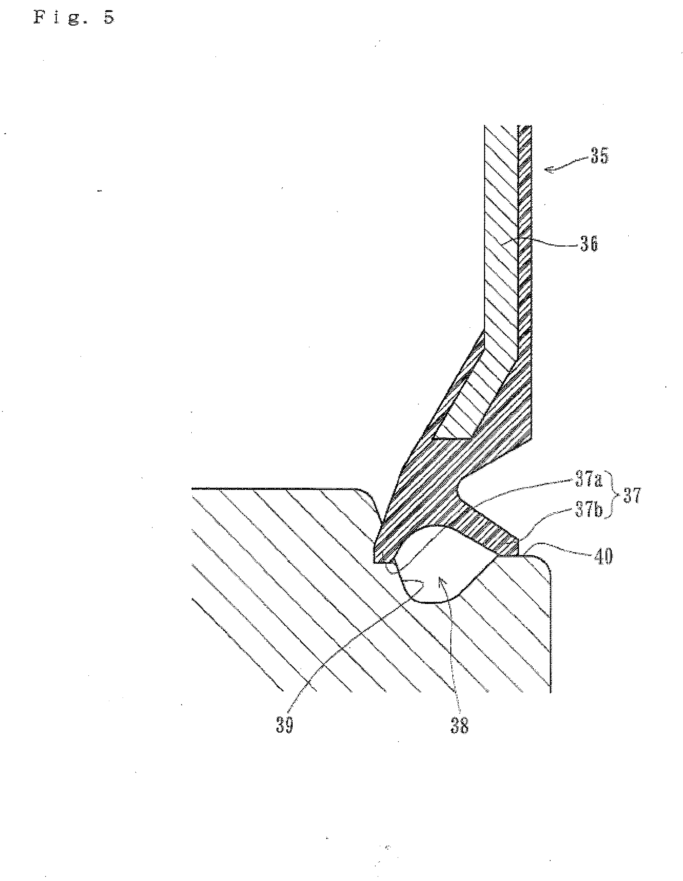

Fig. 4 is a longitudinal-section view of a sealed rolling bearing according to a second embodiment of the present invention and Fig. 5 is a partially enlarged sectional view of Fig. 4. The sealed rolling bearing 20 exemplary shown in Fig. 4 is a deep groove ball bearing and comprises an outer ring 30 formed on its inner circumferential surface with an outer raceway surface 29, an inner ring 32 formed on its outer circumferential surface with an inner raceway surface 31, balls 34 contained and held freely rollably by a cage 33 between the outer and inner raceway surfaces 29 and 31, and a pair of sealing rings 35 arranged in an annular space formed between the outer and inner rings 30 and 32.

Each of the sealing ring 35 comprises a metal core 36 of flat annular configuration formed of cold rolled steel sheet (JIS SPCC etc.) by press forming and a sealing member 37 integrally adhered via vulcanized adhesion on the metal core 36. The sealing rings 35 are fitted into the inner circumferential surface at both ends of the outer ring 30 via the sealing members 37. Each of the sealing member 37 is directly sliding contacted to a sealing groove 38 having a substantially U-shaped cross-section formed on the outer circumferential surface of the inner ring at each end thereof. More in detail the a main lip 37a of the sealing member 37 contacts an inclined sliding surface 39 of the sealing groove 38 and a sub lip 37b of the sealing member 37 a contacts a ridge 40 of the sealing groove 38 via a small interface therebetween. The base of the sub lip 37b has a constricted cross-section and thus the sub lip 37b has small flexural rigidity. Accordingly the sub lip 37b can follow the motion of the main lip 37a and move toward the left hand direction (Fig. 5) in accordance with wear of the main lip 37a and thus increase the interference relative to the ridge 40. Thus the sub lip 37b can suppress the rotational torque of the bearing during the amount of wear of the main lip 37a is small and can on the other hand ensure its sealability with increasing the interference relative to the ridge 40 in accordance with wear of the main lip 37a.

The maximum height Ry or Rmax of the surface roughness of a at least the sliding surface 39 of the sealing groove 38 to which the main sealing lip 37a sliding contacts is limited to a value at 2.0 µ m or less, preferably at 1.2 µ m or less, and that the run-out of the sliding surface 39 normal thereto is limited to a value at 30 µm or less, preferably at 10 µm or less. If these target surface roughness or run-out cannot be obtained, grinding or lapping process may be applied to the sliding surface after its heat treatment.

Thus, it is possible to suppress the absolute irregularities of the sliding surface 39 small as well as to suppress variation of the interference without increasing the interference of the sealing member and thus to stabilize the followability of the sealing lip 37a relative to the sliding surface 39 and thus further to improve the sealability.

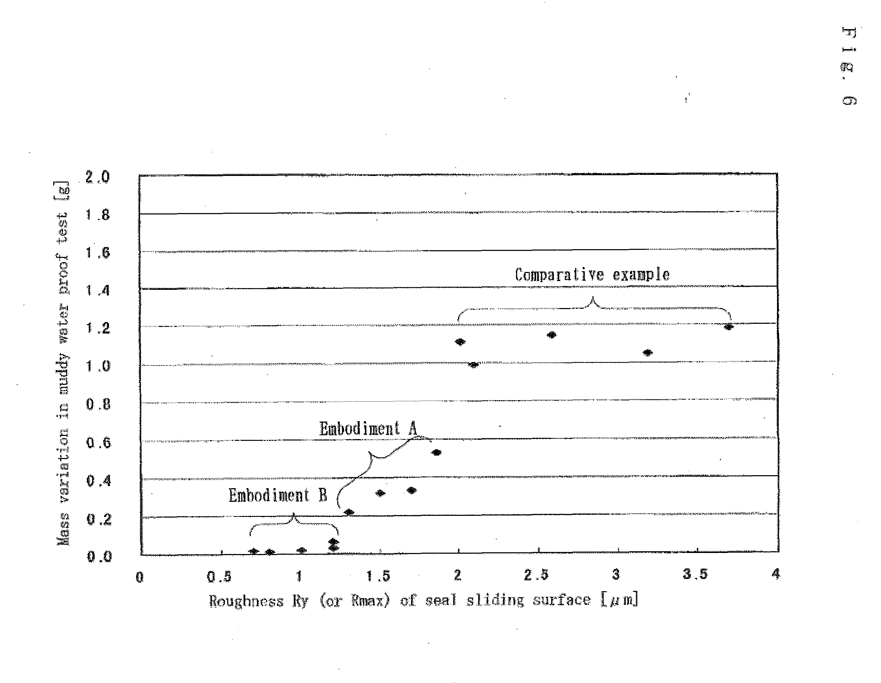

Fig. 6 is a graph showing results of mass variation of muddy water in a muddy water proof test carried out by exposing a naked bearing itself to the muddy water. This test was carried out by spraying Kanto loam JIS 8 mixed liquor onto samples of sealed rolling bearings of the present invention during the driving and prior art and then by measuring the mass variation before and after the test. As can be seen from Fig. 6, there are remarkable differences among a sample 1 (Comparative example) having the maximum height Ry or Rmax of 2.02~3.7 µ m and the run-out of 30 µ m normal to the sliding surface 39, a sample 2 (Embodiment A) having the maximum height Ry or Rmax of 1.3~1.86 µ m and the run-out of 10~30 µ m normal to the sliding surface 39, and a sample 3 (Embodiment B) having the maximum height Ry or Rmax of 0.7~1.2 µ m and the run-out of 10 µ m or less normal to the sliding surface 39.

### Applicability in industries

The sealed rolling bearing of the present invention can be applied to any type of sealed rolling bearings irrespective of its bearing or sealing type used under circumstances in which a large amount of foreign matter such as water or muddy water exists.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A sealed rolling bearing comprising an outer member (1; 30) formed on its inner circumferential surface with outer raceway surface (8; 29); an inner member (4, 5; 32) formed on its outer circumferential surface with inner raceway surface (9a, 9b; 31) arranged oppositely to the outer raceway surface (8; 29); rolling elements (10; 34) contained freely rollably between the outer and inner raceway surfaces; and sealing devices (12, 13; 35) arranged in an annular space formed between the outer and inner members (1; 30 and 4,5; 32) **characterized in that**:
each of the sealing devices (12, 13; 35) has sealing lips (27a~27c, 23~25; 37a, 37b) of elastic member; that the maximum height Ry or Rmax of the surface roughness of a sliding surface of a member of rotational side (18, 4; 32) to which the sealing lips (27a~27c, 23~25; 37a, 37b) sliding contact is limited to a value at 2.0 µ m or less, and that the run-out of the sliding surface normal thereto is limited to a value at 30 µ m or less.

2. A sealed rolling bearing of claim 1 wherein the sealing device (12) comprises a sealing ring (17 or 15, 16) mounted on a member (1) of stationary side and a slinger (18) mounted on a member (5) of rotational side, and wherein the sealing lips (23~25) forming the sealing ring (17 or 15, 16) are sliding contacted to the slinger (18).

3. A sealed rolling bearing of claim 1 wherein the sealing device (13) comprises a sealing ring (26, 27) mounted on a member of stationary side and including side lips (27a, 27b) and a radial lip (27c), and wherein the sealing lips (27a~27c) are directly sliding contacted to the member of rotational side.

4. A sealed rolling bearing of claim 1 wherein the sealing device comprises a sealing ring (35) mounted on a member of stationary side (30) and including a main lip (37a) and a sub lip (37b), wherein the main lip (37a) is directly sliding contacted to a sealing groove (38) formed on a member of rotational side (32) and having a substantially U-shaped cross-section, and wherein the sub lip (37a) is sliding contacted to a ridge (40) of the sealing groove (38) via a small interference.

5. A sealed rolling bearing of any one of claims 1~4 wherein the maximum height Ry or Rmax of the surface roughness of the sliding surface is limited to a value at 1.2 µ m or less, and the run-out of the sliding surface normal thereto is limited to a value at 10 µ m or less.
